(19) Europäisches Patentamt
European Patent Office
Office européen des brevets

(11) **EP 2 685 532 A1**

(12) # EUROPEAN PATENT APPLICATION
published in accordance with Art. 153(4) EPC

(43) Date of publication:
**15.01.2014 Bulletin 2014/03**

(21) Application number: **11861072.4**

(22) Date of filing: **28.12.2011**

(51) Int Cl.:
*H01M 4/505* (2010.01)     *H01M 4/36* (2006.01)
*H01M 4/525* (2010.01)     *H01M 4/587* (2010.01)
*H01M 10/0525* (2010.01)   *H01M 10/0569* (2010.01)

(86) International application number:
**PCT/JP2011/080498**

(87) International publication number:
**WO 2012/124240 (20.09.2012 Gazette 2012/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2011    JP 2011054369**
**22.09.2011    JP 2011206903**

(71) Applicant: Sanyo Electric Co., Ltd.
**Osaka 570-8677 (JP)**

(72) Inventors:
• **YOSHIDA, Toshikazu**
**Moriguchi-shi**
**Osaka 570-8677 (JP)**

• **NIINA, Fumiharu**
**Moriguchi-shi**
**Osaka 570-8677 (JP)**
• **KAWADA, Hiroshi**
**Moriguchi-shi**
**Osaka 570-8677 (JP)**
• **KIDA, Yoshinori**
**Moriguchi-shi**
**Osaka 570-8677 (JP)**

(74) Representative: **Glawe, Delfs, Moll**
**Partnerschaft mbB von**
**Patent- und Rechtsanwälten**
**Postfach 26 01 62**
**80058 München (DE)**

(54) **NONAQUEOUS ELECTROLYTE SECONDARY BATTERY**

(57)    The present invention is aimed at providing a nonaqueous electrolyte secondary battery capable of improving cycling characteristics by improving a positive electrode active material when particles with a structure in which primary particles are aggregated to from secondary particles are used as the positive electrode active material of the nonaqueous electrolyte secondary battery, thereby permitting preferred use as a power supply of a hybrid electric car or the like. The positive electrode active material includes secondary particles 20 composed of aggregated primary particles 21, the primary particles 21 have an aspect ratio of 2.0 or more and 10.0 or less, and in powder X-ray diffraction measurement using CuKα ray, the positive electrode active material satisfies $0.10° \leq FWHM110 \leq 0.30°$ wherein FWHM110 represents a full width at half maximum of a 110 diffraction peak present within a range of diffraction angle $2\theta$ of $64.5° \pm 1.0°$.

## Figure 1

Figure 1

EP 2 685 532 A1

**Description**

Technical Field

The present invention relates to a nonaqueous electrolyte secondary battery.

Background Art

In recent years, reductions in size and weight of mobile apparatuses such as a cellular phone, a notebook-size personal computer, PDA, and the like have been significantly advanced, and power consumption has been increased with increases in functionality. Therefore, nonaqueous electrolyte secondary batteries used as power supplies of the apparatuses have been increasingly required to have lighter weight and higher capacity. In addition, hybrid electric cars using an automotive gasoline engine in combination with an electric motor have recently been being developed for resolving the environmental problem due to exhaust gas emitted from vehicles.

In general, nickel-hydrogen storage batteries are widely used as the power supplies of the hybrid electric cars, but use of nonaqueous electrolyte secondary batteries is researched as power supplies with higher capacity and higher output.

The nonaqueous electrolyte secondary batteries mainly use, as a positive electrode active material of a positive electrode, a lithium transition metal oxide containing cobalt as a main component, such as lithium cobalt oxide ($LiCoO_2$) or the like. However, cobalt used in the positive electrode active material is a scarce resource and thus has the problems of high cost, the difficulty of stable supply, and the like.

In particular, in the use as a power supply of a hybrid electric car or the like, a large number of nonaqueous electrolyte secondary batteries are used, and thus a very large amount of cobalt is required, thereby causing the problem of increasing the cost as the power supply.

Therefore, in recent years, a positive electrode active material containing nickel and manganese as main materials, instead of cobalt, has been researched as a positive electrode active material which can be stably supplied at low cost. For example, lithium nickel oxide ($LiNiO_2$) having a layered structure is expected as a material capable of achieving large discharge capacity, but has the disadvantages of low heat stability, low safety, a high overvoltage. Also, lithium manganese oxide ($LiMn_2O_4$) having a spinel-type structure has the advantages of abundant resources and low cost but has the disadvantages of low energy density and elution of manganese into a nonaqueous electrolyte in a high-temperature environment.

Accordingly, attention is paid to a lithium transition metal oxide having a layered structure and composed of the two elements of nickel and manganese as main components of transition metals, but there are problems with load characteristics and cycling characteristics. Therefore, proposals (1) to (3) below have been made.

(1) It has been proposed that an aspect ratio of primary particles of positive electrode active material particles is regulated to 1 to 1.8 (refer to Patent Literature 1).
(2) It has been proposed that a ratio A/B of median diameter A of secondary particles to average particle diameter (average primary particle diameter B) is in a range of 8 to 100, and in powder X-ray diffraction measurement using CuK$\alpha$ ray, FWHM(110) is regulated to $0.01° \leq$ FWHM(110) $\leq 0.5°$ (refer to Patent Literature 2).
(3) It has been proposed that in powder X-ray diffraction measurement using CuK$\alpha$ ray, FWHM(003) is regulated to $0.05° \leq$ FWHM(003) $\leq 0.2°$ (refer to Patent Literature 3).

Citation List

Patent Literature

PTL 1: Japanese Published Unexamined Patent Application No. 2005-251716
PTL 2: Japanese Published Unexamined Patent Application No. 2009-81130
PTL 3: Publication No. WO 2002/086993

Summary of Invention

Technical Problem

However, the proposals described above in (1) to (3) have problems described below. That is, the cycling characteristics cannot be necessarily improved only by regulating the aspect ratio of primary particles according to the proposal described in (1). In addition, the cycling characteristics cannot be necessarily improved only by regulating the ratio A/B of median diameter A of secondary particles to average diameter (average primary particle diameter B) and FWHM110 according to the proposal described in (2). Further, the cycling characteristics cannot be necessarily improved only by regulating FWHM003 according to the proposal described in (3). In addition, when the aspect ratio of primary particles is regulated to 1 to 1.8 according to the proposal described in (1), the aspect ratio is excessively small, and thus stress induced by expansion and contraction cannot be sufficiently relaxed even by regulating other requirements (FWHM110 value and the like). Therefore, a decrease in electron conduction in secondary particles cannot be suppressed, and thus the cycling characteristics cannot be improved.

Solution to Problem

The present invention includes a positive electrode containing a positive electrode active material, a negative electrode containing a negative electrode active material, and a nonaqueous electrolyte containing a solute dissolved in a nonaqueous solvent, wherein the positive electrode active material includes secondary particles composed of aggregated primary particles, the primary particles have an aspect ratio of 2.0 or more and 10.0 or less, and in powder X-ray diffraction measurement using CuKα ray, the positive electrode active material satisfies $0.10° \leq FWHM110 \leq 0.30°$ wherein FWHM110 represents a full width at half maximum of a 110 diffraction peak present within a range of diffraction angle $2\theta$ of $64.5° \pm 1.0°$.

Advantageous Effects of Invention

According to the present invention, the excellent effect of capable of improving cycling characteristics is exhibited.

Brief Description of Drawings

[Figure 1] Figure 1 is a schematic drawing of a positive electrode active material having a structure in which primary particles are aggregated to form a secondary particle.
[Figure 2] Figure 2 is a schematic drawing of a primary particle.
[Figure 3] Figure 3 is a graph of X-ray diffraction near $2\theta = 18.5°$ of a positive electrode active material used in battery A1.
[Figure 4] Figure 4 is a graph of X-ray diffraction near $2\theta = 65.0°$ of a positive electrode active material used in battery A1.
[Figure 5] Figure 5 is a graph for determining a full width at half maximum dependent on a device.
[Figure 6] Figure 6 is a schematic explanatory drawing of a 18650-type cylindrical battery according to an embodiment of the present invention.

Description of Embodiments

The present invention includes a positive electrode containing a positive electrode active material, a negative electrode containing a negative electrode active material, and a nonaqueous electrolyte containing a solute dissolved in a nonaqueous solvent, wherein the positive electrode active material includes secondary particles composed of aggregated primary particles, the primary particles have an aspect ratio of 2.0 or more and 10.0 or less, and in powder X-ray diffraction measurement using CuKα ray, the positive electrode active material satisfies $0.10° \leq FWHM110 \leq 0.30°$ wherein FWHM110 represents a full width at half maximum of a 110 diffraction peak present within a range of diffraction angle $2\theta$ of $64.5° \pm 1.0°$.

Cycling characteristics can be improved by regulating the aspect ratio of the primary particles and FWHM110 representing a full width at half maximum of a 110 diffraction peak as described above. This is specifically described as follows.

First, when the aspect ratio of the primary particles is less than 2.0, the shape of the primary particles becomes close to a spherical shape, increasing the particle density in the secondary particles. Consequently, electron conduction in the secondary particles is decreased due to stress induced by expansion and contraction. Therefore, when the aspect ratio of the primary particles is regulated to 2.0 or more, the particle density in the secondary particles is decreased, and stress induced by expansion and contraction is relaxed, thereby suppressing a decrease in electron conduction in the secondary particles. However, when the aspect ratio of the primary particles exceeds 10.0, voids inside the secondary particles are enlarged. This causes not only deterioration in filling properties of the positive electrode active material when formed into a battery but also a decrease in electron conduction between the primary particles due to breakage of the secondary particles during rolling for forming a positive electrode. Therefore, the aspect ratio of the primary particles in the positive electrode active material is required to be regulated to 2.0 or more and 10.0 or less, and is particularly preferably regulated to 2.0 or more and 6.0 or less.

With the FWHM110 of less than 0.10°, crystallite interface stress induced by expansion and contraction during charge and discharge is not relaxed because of an excessively large crystallite size, resulting in a decrease in electron conduction. Therefore, by regulating the FWHM110 to 0.10° or more (suppressing crystal growth in the positive electrode active material), crystallite interface stress induced by expansion and contraction during charge and discharge is relaxed because of a small crystallite size and nonuniform crystal orientation, thereby suppressing a decrease in electron conduction. However, with the FWHM110 exceeding 0.30°, crystal growth becomes unsatisfactory (excessively small crystallite size), and thus lithium insertion and desertion becomes difficult, thereby decreasing positive electrode capacity. Therefore, the FWHM110 is required to be regulated to 0.10° or more and 0.30° or less, and is particularly preferably regulated to 0.10° or more and 0.22° or less. Although, in the above-described invention, FWHM003 is not regulated, the FWHM003 is preferably regulated to 0.03° or more and 0.08° or less and is particularly preferably regulated to 0.03° or more and 0.06° or less for the same reasons as the regulation of FWHM110.

The positive electrode active material contains a lithium transition metal oxide having a layered structure and preferably contains nickel and/or manganese as transition metals in the lithium transition metal oxide, and the lithium transition metal oxide is particularly preferably composed of the two elements of nickel and manganese as main components of transition metals.

By using, as the positive electrode active material, the lithium transition metal oxide having a layered structure and being composed of the two elements of nickel and manganese as main components of the transition metals, an attempt can be made to decrease the cost of the battery.

$LiCoO_2$ used as the positive electrode active material has rapid lithium diffusion in a solid phase, and thus primary particles can be made large. There is thus the small effect of forming secondary particles and little need for the regulation as described above. In contrast, the lithium transition metal oxide having a layered structure and including the two elements of nickel and manganese as main components of the transition metals has slow lithium diffusion in a solid phase, and thus primary particles become small. On the other hand, in order to enhance the filling properties of the positive electrode active material, it is necessary to form secondary particles by aggregating primary particles. There is thus the high necessity for the above-described regulation.

The expression "composed of the two elements of nickel and manganese as the main components" represents a case in which a ratio of the total amount of nickel and manganese to the total amount of the transition metals exceeds 50 mol%.

The lithium transition metal oxide used is preferably represented by the general formula $Li_{1+x}Ni_aMn_bCo_cO_{2+d}$ (wherein x, a, b, c, and d satisfy the conditions of $x + a + b + c = 1$, $0 < x \leq 0.2$, $0 \leq c/(a + b) < 0.6$, $0.7 \leq a/b \leq 3.0$, and $-0.1 \leq d \leq 0.1$).

The lithium transition metal oxide represented by the general formula where the cobalt composition ratio c, the nickel composition ratio a, and the manganese composition ratio b satisfy the condition $0 \leq c/(a + b) < 0.6$ is used because the material cost of the positive electrode active material is decreased by decreasing the cobalt ratio, and with the low cobalt ratio, it is necessary to decrease the primary particle size because of the slow lithium diffusion in a solid phase and to form secondary particles by aggregating the primary particles in order to enhance the filling properties of the positive electrode active material. In view of this, $0 \leq c/(a + b) < 0.4$ is more preferred, and $0 \leq c/(a + b) < 0.2$ is most preferred.

In the general formula, the nickel composition ratio a and the manganese composition ratio b satisfy the condition $0.7 \leq a/b \leq 3.0$ for the following reasons. That is, when the a/b value exceeds 3.0 and the ratio of nickel is high, heat stability of the lithium transition metal oxide is extremely lowered, and thus the temperature at a peak heating value may be decreased, thereby degrading stability. On the other hand, when the a/b value is less than 0.7, the ratio of manganese is increased, and the capacity is decreased due to the occurrence of an impurity phase.

Further, the lithium transition metal oxide represented by the general formula where x in the lithium composition ratio (1 + x) satisfies the condition $0 < x \leq 0.2$ is used because when $x > 0$, output characteristics are improved. On the other hand, when $x > 0.2$, the amount of alkali remaining on a surface of the lithium transition metal oxide is increased, resulting in gelling of slurry in a battery forming step and a decrease in capacity due to a decrease in amount of the transition metal which produces oxidation-reduction reaction.

In addition, in the lithium transition metal oxide, d in the oxygen composition ratio (2 + d) satisfies the condition $-0.1 \leq d \leq 0.1$ in order to prevent deterioration in the crystal structure of the lithium transition metal oxide due to an oxygen-deficient state or an oxygen-surplus state.

The secondary particles of the positive electrode active material preferably have a volume-average particle diameter of 4 $\mu$m or more and 15 $\mu$m or less.

This is because when the secondary particles of the positive electrode active material have a particle diameter exceeding 15 $\mu$m, the discharge performance is degraded due to the poor conductivity of the positive electrode active material, while when the positive electrode active material has a particle diameter of less than 4 $\mu$m, the specific surface area of the positive electrode active material is increased, resulting in higher reactivity with a nonaqueous electrolyte and deterioration in storage characteristics and the like.

A mixed solvent containing cyclic carbonate and linear carbonate at a volume ratio regulated to a range of 2: 8 to 5:5 is preferably used as a nonaqueous solvent of the nonaqueous electrolyte.

When the mixed solvent containing cyclic carbonate and linear carbonate at a higher ratio of the linear carbonate is used as the nonaqueous solvent, the low-temperature characteristics of the nonaqueous electrolyte secondary battery can be improved.

The negative electrode active material preferably contains amorphous carbon and particularly preferably contains graphite coated with amorphous carbon.

The amorphous carbon present on a surface of the negative electrode active material permits smooth insertion and desertion of lithium and thus permits an attempt to improve output when the battery of the present invention is used for an automotive power supply or the like.

(Other matters)

(1) The lithium transition metal oxide may contain at least one selected from the group consisting of boron (B), fluorine (F), magnesium (Mg), aluminum (Al), chromium (Cr), vanadium (V), iron (Fe), copper (Cr), zinc (Zn), molybdenum (Mo), zirconium (Zr), tin (Sn), tungsten (W), sodium (Na), potassium (K), titanium (Ti), niobium (Nb), and tantalum (Ta). The adding amount thereof is preferably 0.1 mol% or more and 5.0 mol% or less and particularly preferably 0.1 mol% or more and 3.0 mol% or less relative to the transition metals in the lithium transition metal oxide. This is because with the adding amount exceeding 5.0 mol%, the capacity is decreased, and the energy density is decreased. While with the adding amount of less than 0.1 mol%, the influence of the added element on crystal growth is decreased.

(2) The positive electrode active material used in the nonaqueous electrolyte secondary battery of the present invention need not be composed of only the above-described positive electrode active material, and a mixture of the above-described positive electrode active material and another positive electrode active material can also be used. The other positive electrode active material is not particularly limited as long as it is a compound which enables reversible insertion and desertion of lithium, and for example, a compound having a layered structure, a spinel-type structure, or an olivine-type structure into and from which lithium can be inserted and deserted while maintaining a stable crystal structure can be used. Examples of a conductive agent used in the positive electrode include furnace black, acetylene black, Ketjen black, graphite, carbon nanotubes, vapor-grown carbon fibers (VGCF), and a mixture thereof. In order to improve electron conduction in the positive electrode, furnace black is particularly preferably used.

(3) The packing density of the positive electrode used in the nonaqueous electrolyte secondary battery of the present invention is preferably 2.0 g/cm$^3$ or more and 4.0 g/cm$^3$ or less, more preferably 2.2 g/cm$^3$ or more and 3.6 g/cm$^3$ or less, and particularly preferably 2.3 g/cm$^3$ or more and 3.2 g/cm$^3$ or less. This is because with the packing density exceeding 4.0 g/cm$^3$, the amount of the electrolyte in the positive electrode is decreased, thereby causing deterioration in the cycling characteristics due to heterogeneous reaction. On the other hand, with the packing density of less than 2.0 g/cm$^3$, not only the energy density but also the electron conduction in the positive electrode is decreased, thereby causing a decrease in capacity and deterioration in the cycling characteristics due to heterogeneous reaction.

(4) The negative electrode active material used in the nonaqueous electrolyte secondary battery of the present invention is not particularly limited as long as it can absorb and desorb lithium reversibly, and, for example, a carbon material, a metal or alloy material capable of alloying with lithium, a metal oxide, and the like can be used. From the viewpoint of material cost, a carbon material is preferably used as the negative electrode active material. Usable examples thereof include natural graphite, artificial graphite, mesophase pitch-based carbon fibers (MCF), meso-carbon microbeads (MCMB), cokes, hard carbon, fullerene, carbon nanotubes, and the like. In particular, as described above, a carbon material composed of a graphite material coated with low-crystallinity carbon is preferably used from the viewpoint of improving high-rate charge-discharge characteristics.

(5) A known nonaqueous solvent which has been used can be used as the nonaqueous solvent used in the nonaqueous electrolyte of the nonaqueous electrolyte secondary battery of the present invention. Usable examples thereof include cyclic carbonates such as ethylene carbonate, propylene carbonate, butylene carbonate, vinylene carbonate, and the like; linear carbonates such as dimethyl carbonate, methylethyl carbonate, diethyl carbonate, and the like. In particular, a mixed solvent of cyclic carbonate and linear carbonate is preferably used as a nonaqueous solvent having low viscosity, low melting point, and high lithium ion conductivity, and the volume ratio between the cyclic carbonate and the linear carbonate in the mixed solvent is preferably regulated to a range of 2:8 to 5:5 as described above.

Also, an ionic liquid can be used as the nonaqueous solvent of the nonaqueous electrolyte. In this case, a cationic species and an anionic species are not particularly limited, but in view of low viscosity, electrochemical stability, and hydrophobicity, a combination of a cation, such as pyridinium cation, imidazolium cation, or quaternary ammonium cation, and an anion such as fluorine-containing imide-based anion, is particularly preferred.

(6) A known lithium salt which has been used can be used as a solute of the nonaqueous electrolyte, and examples of the lithium salt include $LiXF_p$ (X is P, As, Sb, Al, B, Bi, Ga, or In, when X is P, As, or Sb, p is 6, and when X is Al, B, Bi, Ga, or In, p is 4), $LiN(C_{m+1}SO_2)(C_nF_{2n+1}SO_2)$ (m and n are each independently an integer of 1 to 4), $LiC(C_pF_{2p+1}SO_2)(C_qF_{2q+1}SO_2)(C_rF_{2r+1}SO_2)$ (wherein p, q, and r are each independently an integer of 1 to 4), $Li[M(C_2O_4)_xR_y]$ (wherein M is an element selected from the transition metals and Group 3b, Group 4b, and Group 5b in the periodic table, R is a group selected from a halogen, an alkyl group, and a halogen-substituted alkyl group, x is a positive integer, and y is 0 or a positive integer), and a mixture thereof. In particular, $LiPF_6$ is preferably used in order to enhance the high-rate charge-discharge characteristics and durability of the nonaqueous electrolyte secondary battery. When $LiXF_p$ is used, the concentration of $LiXF_p$ is preferably as high as possible within a range where the solute is neither dissolved nor precipitated.

(7) A separator used in the nonaqueous electrolyte secondary battery of the present invention is not particularly limited as long as it is a material which prevents short-circuiting due to contact between the positive electrode and the negative electrode and which can provide lithium ion conductivity by being impregnated with the nonaqueous electrolyte. Usable examples thereof include a separator composed of polypropylene or polyethylene, a polypropylene-polyethylene multilayer separator, and the like.

EXAMPLES

A nonaqueous electrolyte secondary battery according to the present invention is described in detail below by way of examples, but the nonaqueous electrolyte secondary battery according to the present invention is not limited to the examples below, and appropriate modification can be made without changing the gist of the present invention.

(EXAMPLE 1)

[Preparation of positive electrode active material]

First, an aqueous solution prepared from nickel sulfate, cobalt sulfate, and manganese sulfate and containing cobalt ions, nickel ions, and manganese ions was prepared in a reaction vessel so that the molar ratio (cobalt:nickel:manganese) between cobalt, nickel, and manganese in the aqueous solution was 2:5:3. Next, an aqueous sodium hydroxide solution was added dropwise over 2 hours to adjust the aqueous solution to pH = 9 while the temperature of the aqueous solution was kept at 50°C. As a result, precipitates containing cobalt, nickel, and manganese were produced, and the precipitates were filtered off, washed with water, and then dried to produce $Ni_{0.5}Co_{0.2}Mn_{0.3}(OH)_2$.

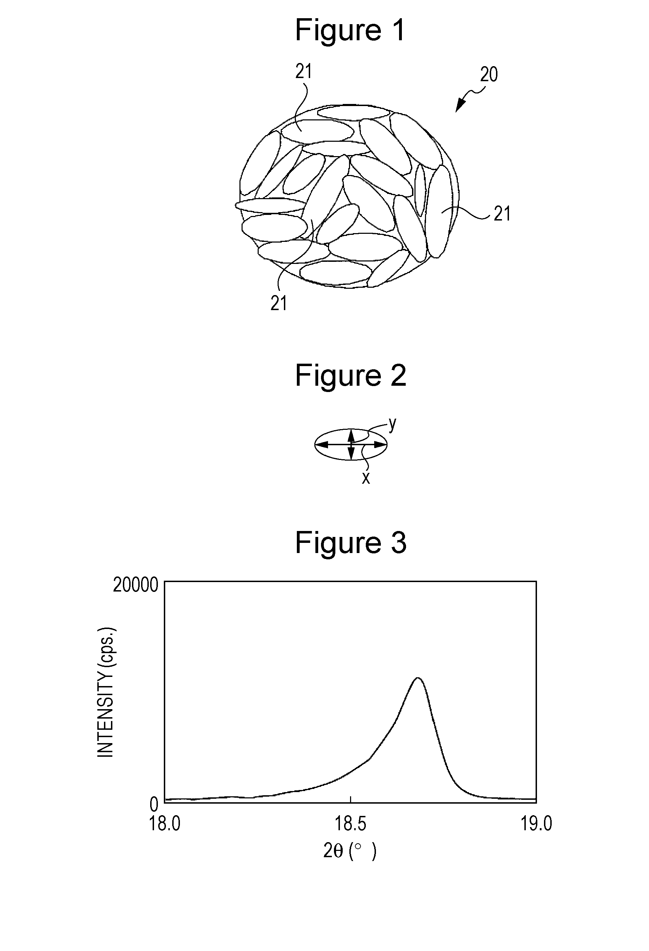

Next, $Ni_{0.5}CO_{0.2}Mn_{0.3}(OH)_2$ produced by a co-precipitation method was mixed with $Li_2CO_3$ at a predetermined ratio, and the resultant mixture was fired in air at 920°C for 10 hours to produce $Li_{1.13}Ni_{0.43}Co_{0.17}Mn_{0.26}O_2$ (lithium transition metal oxide) having a layered structure. As shown in Figure 1, the thus-produced $Li_{1.13}Ni_{0.43}Co_{0.17}Mn_{0.26}O_2$ was composed of secondary particles 20 formed by aggregation of primary particles 21, the primary particles had an aspect ratio of 3.8, and the secondary particles had a volume-average particle diameter of about 8 $\mu$m.

The aspect ratio of the primary particles was determined as follows. A plurality of primary particles were randomly observed with SEM to determine x (maximum diameter of particle image) and y (maximum diameter perpendicular to x) of each of primary particle images shown in Figure 2. An average of values obtained by dividing x values by y values was determined as the aspect ratio. Also, the volume-average particle diameter of the secondary particles was measured using a laser diffraction particle size distribution analyzer.

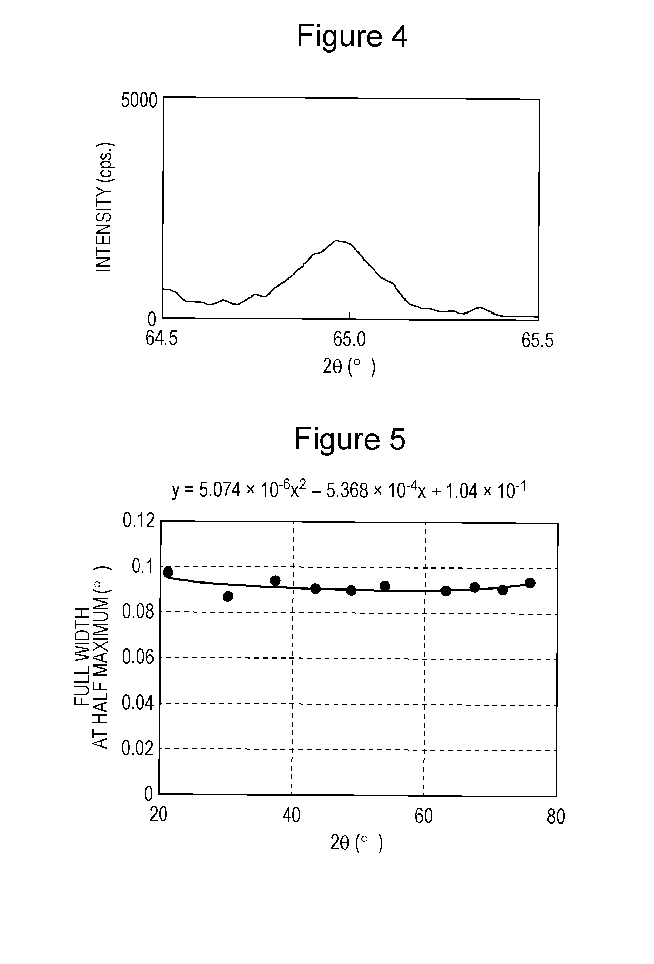

Further, an XRD pattern of the lithium transition metal oxide was measured with a powder X-ray diffractometer (manufactured by Rigaku Co., Ltd.) using CuK$\alpha$ as an X-ray source, and then full width at half maximum FWHM003 of a peak present within a range of $2\theta = 18.5 \pm 1.0°$ shown in Figure 3 and full width at half maximum FWHM110 of a peak present within a range of $2\theta = 64.5 \pm 1.0°$ shown in Figure 4 were calculated according to procedures described below.

[A] Full width at half maximum determined by peak search (including a device-dependent value)

(a) A background was removed from the resultant XRD pattern. In this case, the XRD pattern was approximated by a cubic equation, and Kα2 was removed on the assumption that an intensity ratio (Kα1/Kα2) of Kα1 to Kα2 was 2.0.
(b) Peak search of the diffraction pattern after removal of the background was carried out, and FWHM003 and FWHM110 were calculated. Each of the full widths at half maximum was calculated according to formula (1) below. In the formula (1), SF representing a constant for a peak shape was determined to 0.8.

Full width at half maximum = SF x peak area/peak height ... (1)
The full widths at half maximum FWHM003 and FWHM110 obtained by this method were 0.19° and 0.25°, respectively.

[B] Full width at half maximum determined by peak fitting (including a device-dependent value)

However, the full widths at half maximum calculated as described above in [A] have a large analytical error. Therefore, ten peaks of 003, 101, 006, 012, 104, 015, 107, 018, 110, and 113 were extracted from the XRD pattern of the lithium transition metal oxide using a split pseudo-Voigt function and a full width at half maximum was calculated with higher precision by peak fitting of these peaks with the split pseudo-Voigt function.
The full widths at half maximum FWHM003 and FWHM110 obtained by this method were 0.15° and 0.26°, respectively.

[C] Full width at half maximum determined by peak fitting (with a device-dependent value subtracted)

Each of the full widths at half maximums calculated by the method [B] includes a full width at half maximum dependent on the device. Therefore, a full width at half maximum dependent on the device was calculated and then subtracted from the full width at half maximum calculated by the method [B]. This is specifically described as follows.
In order to calculate a full width at half maximum dependent on the device, ten peaks of 100, 110, 111, 200, 210, 211, 220, 221, 310, and 311 were measured using NISTSRM 660b LaB6 having high crystallinity and very small full widths at half maximum, followed by fitting with the split pseudo-Voigt function. The obtained full widths at half maximum of lattice planes were approximated by a quadric curve, and an approximate formula of the full widths at half maximum with angles was calculated as shown in Figure 5 [in Figure 5, the ordinate (full width at half maximum) is y, and the abscissa (2θ) is x].
A value at each angle in the approximate formula corresponds to the full width at half maximum dependent on the device (a value of about 0.10° at 2θ ≠ 18.5° for the full width at half maximum FWHM003, and value of about 0.09° at 2θ ≠ 64.5° for the full width at half maximum FWHM110). Finally, each of the FWHM003 and FWHM110 with a device-dependent value subtracted was calculated by subtracting the full width at half maximum dependent on the device from the full width at half maximum calculated by the method [B].
The full widths at half maximum FWHM003 and FWHM110 obtained by this method were 0.05° (0.15° - 0.10°) and 0.17° (0.26° - 0.09°), respectively.
In addition, the aspect ratio of the primary particles, the full width at half maximum FWHM003, the full width at half maximum FWHM110, and the volume-average particle diameter of the secondary particles can be changed by changing the temperature of the aqueous solution containing cobalt, nickel, and manganese, the dropping time of the aqueous sodium hydroxide solution, pH, the firing temperature, the firing time, and the presence of Zr.

[Formation of positive electrode]

First, $Li_{1.13}Ni_{0.43}Co_{0.17}Mn_{0.26}O_2$ used as a positive electrode active material, acetylene black as a conductive agent, and polyvinylidene fluoride as a binder were mixed at a mass ratio of 90:5:5, and an appropriate amount of N-methyl-2-pyrrolidone (NMP) was added to the resultant mixture to prepare a positive electrode slurry. Next, the positive electrode slurry was applied to both surfaces of a positive-electrode current collector composed of an aluminum foil by a doctor blade method, dried, cut into a size of 55 mm x 750 mm, and then rolled with a roller. Further, a positive-electrode lead was attached, thereby forming a positive electrode including positive electrode active material layers formed on both surfaces of the positive-electrode current collector. The packing density of the positive electrode active material layer was 2.6 g/cm³.

[Formation of negative electrode]

First, amorphous carbon-coated graphite (amorphous carbon content: 2% by mass) used as a negative electrode active material, SBR as a binder, and CMC (carboxymethyl cellulose) as a thickener were mixed at a mass ratio of 98: 1:1, and an appropriate amount of distilled water was added to the resultant mixture to prepare a negative electrode slurry. Next, the negative electrode slurry was applied to both surfaces of a negative-electrode current collector composed of a copper foil by a doctor blade method, dried, cut into a size of 58 mm x 850 mm, and then rolled with a roller. Further, a negative-electrode lead was attached, thereby forming a negative electrode.

[Preparation of nonaqueous electrolyte]

LiPF$_6$ was dissolved at 1 mol/l in a solvent prepared by mixing ethylene carbonate, methylethyl carbonate, and dimethyl carbonate at a volume ratio of 3:3:4, and then vinylene carbonate was mixed so that a ratio to the solvent was 1% by mass to prepare a nonaqueous electrolyte.

[Formation of nonaqueous electrolyte secondary battery]

A 18650-type nonaqueous electrolyte secondary battery was formed by using the above-described positive electrode, negative electrode, and nonaqueous electrolyte, and a separator composed of a polyethylene micro-porous film.

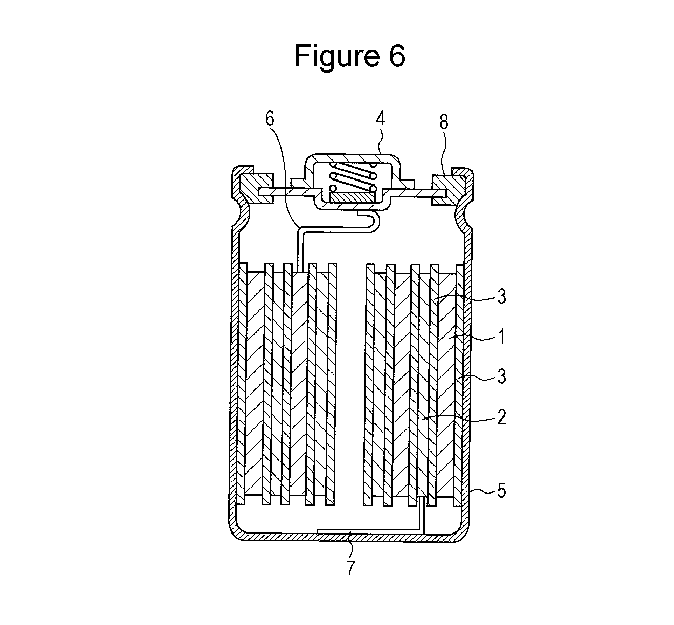

Figure 6 is a schematic sectional view illustrating the formed nonaqueous electrolyte secondary battery. The nonaqueous electrolyte secondary battery shown in Figure 6 includes a positive electrode 1, a negative electrode 2, a separator 3, a sealing plate 4 also serving as a positive electrode terminal, a negative electrode case 5, a positive electrode current collector 6, a negative electrode current collector 7, and an insulating packing 8. The positive electrode 1 and the negative electrode face each other with the separator 3 disposed therebetween, and are housed in a battery case including the sealing plate 4 and the negative electrode case 5. The positive electrode 1 is connected to the sealing plate 4, which also serves as the positive electrode terminal, through the positive electrode current collector 6, and the negative electrode 2 is connected to the negative electrode case 5 through the negative electrode current collector 7 so that chemical energy produced in the battery can be taken out as electric energy to the outside.

The thus-formed battery is referred to as "battery A1" hereinafter.

[EXAMPLE 2]

A nonaqueous electrolyte secondary battery was formed by the same method as in Example 1 except that in forming the positive electrode active material, the firing temperature was 970°C. As a result of measurement of an aspect ratio of primary particles by the same method as in Example 1, the aspect ratio was 3.1. Also, as a result of measurement of full width at half maximum FWHM003 and full width at half maximum FWHM110 by the same method as in Example 1, the FWHM003 was 0.03°, and the FWHM110 was 0.12°. In this case, each of the full width at half maximum FWHM003 and the full width at half maximum FWHM110 represents a full width at half maximum (with a device-dependent value subtracted) by peak fitting described above in [C]. Hereinafter, each of the full width at half maximum FWHM003 and the full width at half maximum FWHM110 represents a full width at half maximum (with a device-dependent value subtracted) by peak fitting described above in [C] unless otherwise specified. Further, as a result of measurement of a volume-average particle diameter of secondary particles by the same method as in Example 1, the volume-average particle diameter was about 8 μm.

The thus-formed battery is referred to as "battery A2" hereinafter.

(EXAMPLE 3)

A nonaqueous electrolyte secondary battery was formed by the same method as in Example 1 except that in forming the positive electrode active material, the aqueous sodium hydroxide solution was added dropwise over 3 hours, and the firing temperature was 970°C. As a result of measurement of an aspect ratio of primary particles by the same method as in Example 1, the aspect ratio was 5.2. Also, as a result of measurement of full width at half maximum FWHM003 and full width at half maximum FWHM110 by the same method as in Example 1, the FWHM003 was 0.03°, and the FWHM110 was 0.11°. Further, as a result of measurement of a volume-average particle diameter of secondary particles by the same method as in Example 1, the volume-average particle diameter was about 8 μm.

The thus-formed battery is referred to as "battery A3" hereinafter.

(EXAMPLE 4)

A nonaqueous electrolyte secondary battery was formed by the same method as in Example 1 except that in forming the positive electrode active material, the aqueous sodium hydroxide solution was added dropwise over 1 hour, and the firing temperature was 900°C. As a result of measurement of an aspect ratio of primary particles by the same method as in Example 1, the aspect ratio was 2.0. Also, as a result of measurement of full width at half maximum FWHM003 and full width at half maximum FWHM110 by the same method as in Example 1, the FWHM003 was 0.04°, and the FWHM110 was 0.16°. Further, as a result of measurement of a volume-average particle diameter of secondary particles by the same method as in Example 1, the volume-average particle diameter was about 8 $\mu$m.

The thus-formed battery is referred to as "battery A4" hereinafter.

(EXAMPLE 5)

A nonaqueous electrolyte secondary battery was formed by the same method as in Example 1 except that in forming the positive electrode active material, the aqueous sodium hydroxide solution was added dropwise over 1 hour, and the firing temperature was 880°C. As a result of measurement of an aspect ratio of primary particles by the same method as in Example 1, the aspect ratio was 2.7. Also, as a result of measurement of full width at half maximum FWHM003 and full width at half maximum FWHM110 by the same method as in Example 1, the FWHM003 was 0.06°, and the FWHM110 was 0.22°. Further, as a result of measurement of a volume-average particle diameter of secondary particles by the same method as in Example 1, the volume-average particle diameter was  about 8 $\mu$m.

The thus-formed battery is referred to as "battery A5" hereinafter.

(EXAMPLE 6)

In forming a positive electrode active material, an aqueous solution prepared from nickel sulfate and manganese sulfate and containing nickel ions and manganese ions was prepared in a reaction vessel so that a molar ratio (nickel: manganese) between nickel and manganese in the aqueous solution was 6:4. Next, an aqueous sodium hydroxide solution was added dropwise over 2 hours to adjust the aqueous solution to pH = 9 while the temperature of the aqueous solution was kept at 50°C. As a result, precipitates containing nickel and manganese were produced, and the precipitates were filtered off, washed with water, and then dried to produce $Ni_{0.6}Mn_{0.4}(OH)_2$.

Next, $Ni_{0.6}Mn_{0.4}(OH)_2$ produced by a coprecipitation method was mixed with $Li_2CO_3$ at a predetermined ratio, and the resultant mixture was fired in air at 830°C for 10 hours to produce $Li_{1.15}Ni_{0.52}Mn_{0.35}O_2$ (lithium transition metal oxide) having a layered structure. A nonaqueous electrolyte secondary battery was formed by the same method as in Example 1 except that the positive electrode active material was prepared as described above.

The resultant $Li_{1.15}Ni_{0.52}Mn_{0.35}O_2$ was composed of secondary particles 20 produced by aggregating primary particles 21 as shown in Figure 1. As a result of measurement of an aspect ratio of primary particles by the same method as in Example 1, the aspect ratio of the primary particles was 2.0. Also, as a result of measurement of full width at half maximum FWHM003 and full width at half maximum FWHM110 by the same method as in Example 1, the FWHM003 was 0.08°, and the FWHM110 was 0.26°. Further, as a result of measurement of a volume-average particle diameter of secondary particles by the same method as in Example 1, the volume-average particle diameter was about 8 $\mu$m.

The thus-formed battery is referred to as "battery A6" hereinafter.

(EXAMPLE 7)

A nonaqueous electrolyte secondary battery was formed by the same method as in Example 6 except that in forming the positive electrode active material, the aqueous sodium hydroxide solution was added dropwise over 3 hours, and the firing temperature was 850°C. As a result of measurement of an aspect ratio of primary particles by the same method as in Example 1, the aspect ratio was 3.1. Also, as a result of measurement of full width at half maximum FWHM003 and full width at half maximum FWHM110 by the same method as in Example 1, the FWHM003 was 0.07°, and the FWHM110 was 0.24°. Further, as a result of measurement of a volume-average particle diameter of secondary particles by the same method as in Example 1, the volume-average particle diameter was about 8 $\mu$m.

The thus-formed battery is referred to as "battery A7" hereinafter.

(EXAMPLE 8)

In forming a positive electrode active material, an aqueous solution prepared from nickel sulfate, cobalt sulfate, and manganese sulfate and containing cobalt ions, nickel ions, and manganese ions was prepared in a reaction vessel so that a molar ratio (cobalt:nickel:manganese) between cobalt, nickel, and manganese in the aqueous solution was 35:35:30. Next, an aqueous sodium hydroxide solution was added dropwise over 2 hours to adjust the aqueous solution to pH = 9 while the temperature of the aqueous solution was kept at 50°C. As a result, precipitates containing cobalt, nickel, and manganese were produced, and the precipitates were filtered off, washed with water, and then dried to produce $Ni_{0.35}Co_{0.35}Mn_{0.30}(OH)_2$.

Next, $Ni_{0.35}Co_{0.35}Mn_{0.30}(OH)_2$ produced by a coprecipitation method was mixed with $Li_2CO_3$ at a predetermined ratio, and the resultant mixture was fired in air at 970°C for 10 hours  to produce $Li_{1.09}Ni_{0.32}Co_{0.32}Mn_{0.27}O_2$ (lithium transition metal oxide) having a layered structure. A nonaqueous electrolyte secondary battery was formed by the same method as in Example 1 except that the positive electrode active material was prepared as described above.

The resultant $Li_{1.09}Ni_{0.32}Co_{0.32}Mn_{0.27}O_2$ was composed of secondary particles 20 produced by aggregating primary particles 21 as shown in Figure 1. As a result of measurement of an aspect ratio of primary particles by the same method as in Example 1, the aspect ratio of the primary particles was 2.6. Also, as a result of measurement of full width at half maximum FWHM003 and full width at half maximum FWHM110 by the same method as in Example 1, the FWHM003 was 0.03°, and the FWHM110 was 0.13°. Further, as a result of measurement of a volume-average particle diameter of secondary particles by the same method as in Example 1, the volume-average particle diameter was about 8 $\mu$m.

The thus-formed battery is referred to as "battery A8" hereinafter.

(EXAMPLE 9)

A nonaqueous electrolyte secondary battery was formed by the same method as in Example 8 except that in forming the positive electrode active material, a mixing ratio between $Ni_{0.35}CO_{0.35}Mn_{0.30}(OH)_2$ produced by a co-precipitation method and $Li_2CO_3$ was changed to produce $Li_{1.05}Ni_{0.33}CO_{0.33}Mn_{0.29}O_2$ having a layered structure. As a result of measurement of an aspect ratio of primary particles by the same method as in Example 1, the aspect ratio was 3.1. Also, as a result of measurement of full width at half maximum FWHM003 and full width at half maximum FWHM110 by the same method as in Example 1, the FWHM003 was 0.04°, and the FWHM110 was 0.12°. Further, as a result of measurement of a volume-average particle diameter of secondary particles by the same method as in Example 1, the volume-average particle diameter was about 8 $\mu$m.

The thus-formed battery is referred to as "battery A9" hereinafter.

(EXAMPLE 10)

A nonaqueous electrolyte secondary battery was formed by the same method as in Example 1 except that in forming the positive electrode active material, the temperature of the aqueous solution was 40°C, the aqueous sodium hydroxide solution was added dropwise over 1 hour, and the firing temperature was 910°C. As a result of measurement of an aspect ratio of primary particles by the same method as in Example 1, the aspect ratio was 2.9. Also, as a result of measurement of full width at half maximum FWHM003 and full width at half maximum FWHM110 by the same method as in Example 1, the FWHM003 was 0.06°, and the FWHM110 was 0.17°. Further, as a result of measurement of a volume-average particle diameter of secondary particles by the same method as in Example 1, the volume-average particle diameter was about 6 $\mu$m.

The thus-formed battery is referred to as "battery A10" hereinafter.

(EXAMPLE 11)

A nonaqueous electrolyte secondary battery was formed by the same method as in Example 3 except that in forming the positive electrode active material, 0.5 mol% of $ZrO_2$ was added to $Ni_{0.5}Co_{0.2}Mn_{0.3}(OH)_2$. As a result of measurement of an aspect ratio of primary particles by the same method as in Example 1, the aspect ratio was 5.3. Also, as a result of measurement of full width at half maximum FWHM003 and full width at half maximum FWHM110 by the same method as in Example 1, the FWHM003 was 0.06°, and the FWHM110 was 0.16°. Further, as a result of measurement of a volume-average particle diameter of secondary particles by the same method as in Example 1, the volume-average particle diameter was about 8 $\mu$m.

The thus-formed battery is referred to as "battery A11" hereinafter.

(EXAMPLE 12)

A nonaqueous electrolyte secondary battery was formed by the same method as in Example 1 except that in forming the positive electrode active material, the aqueous sodium hydroxide solution was added dropwise over 5 hours, and the firing temperature was 970°C. As a result of measurement of an aspect ratio of primary particles by the same method as in Example 1, the aspect ratio was 9.8. Also, as a result of measurement of full width at half maximum FWHM003 and full width at half maximum FWHM110 by the same method as in Example 1, the FWHM003 was 0.06°, and the FWHM110 was 0.16°. Further, as a result of measurement of a volume-average particle diameter of secondary particles by the same method as in Example 1, the volume-average particle diameter was about 8 $\mu$m.

The thus-formed battery is referred to as "battery A12" hereinafter.

(COMPARATIVE EXAMPLE 1)

A nonaqueous electrolyte secondary battery was formed by the same method as in Example 1 except that in forming the positive electrode active material, the aqueous sodium hydroxide solution was added dropwise over 1 hour, and the firing temperature was 970°C. As a result of measurement of an aspect ratio of primary particles by the same method as in Example 1, the aspect ratio was 1.7. Also, as a result of measurement of full width at half maximum FWHM003 and full width at half maximum FWHM110 by the same method as in Example 1, the FWHM003 was 0.04°, and the FWHM110 was 0.12°. Further, as a result of measurement of a volume-average particle diameter of secondary particles by the same method as in Example 1, the volume-average particle diameter was about 8 $\mu$m.

The thus-formed battery is referred to as "battery Z1" hereinafter.

(COMPARATIVE EXAMPLE 2)

A nonaqueous electrolyte secondary battery was formed by the same method as in Example 1 except that in forming the positive electrode active material, the firing temperature was 1000°C. As a result of measurement of an aspect ratio of primary particles by the same method as in Example 1, the aspect ratio was 2.3. Also, as a result of measurement of full width at half maximum FWHM003 and full width at half maximum FWHM110 by the same method as in Example 1, the FWHM003 was 0.02°, and the FWHM110 was 0.06°. Further, as a result of measurement of a volume-average particle diameter of secondary particles by the same method as in Example 1, the volume-average particle diameter was about 8 $\mu$m.

The thus-formed battery is referred to as "battery Z2" hereinafter.

(COMPARATIVE EXAMPLE 3)

A nonaqueous electrolyte secondary battery was formed by the same method as in Comparative Example 1 except that in forming the positive electrode active material, the temperature of the aqueous solution was 40°C. As a result of measurement of an aspect ratio of primary particles by the same method as in Example 1, the aspect ratio was 1.7. Also, as a result of measurement of full width at half maximum FWHM003 and full width at half maximum FWHM110 by the same method as in Example 1, the FWHM003 was 0.04°, and the FWHM110 was 0.13°. Further, as a result of measurement of a volume-average particle diameter of secondary particles by the same method as in Example 1, the volume-average particle diameter was about 6 $\mu$m.

The thus-formed battery is referred to as "battery Z3" hereinafter.

(COMPARATIVE EXAMPLE 4)

A nonaqueous electrolyte secondary battery was formed by the same method as in Example 6 except that in forming the positive electrode active material, the temperature of the aqueous solution was 40°C, the aqueous sodium hydroxide solution was added dropwise over 1 hour, and the firing temperature was 850°C. As a result of measurement of an aspect ratio of primary particles by the same method as in Example 1, the aspect ratio was 1.4. Also, as a result of measurement of full width at half maximum FWHM003 and full width at half maximum FWHM110 by the same method as in Example 1, the FWHM003 was 0.03°, and the FWHM110 was 0.16°. Further, as a result of measurement of a volume-average particle diameter of secondary particles by the same method as in Example 1, the volume-average particle diameter was about 6 $\mu$m.

The thus-formed battery is referred to as "battery Z4" hereinafter.

(COMPARATIVE EXAMPLE 5)

A nonaqueous electrolyte secondary battery was formed by the same method as in Comparative Example 2 except that in forming the positive electrode active material, 0.5 mol% of $ZrO_2$ was added to $Ni_{0.5}Co_{0.2}Mn_{0.3}(OH)_2$. As a result of measurement of an aspect ratio of primary particles by the same method as in Example 1, the aspect ratio was 2.4. Also, as a result of measurement of full width at half maximum FWHM003 and full width at half maximum FWHM110 by the same method as in Example 1, the FWHM003 was 0.02°, and the FWHM110 was 0.07°. Further, as a result of measurement of a volume-average particle diameter of secondary particles by the same method as in Example 1, the volume-average particle diameter was about 8 $\mu$m.

The thus-formed battery is referred to as "battery Z5" hereinafter.

(Difference in production of positive electrode active material and composition of positive electrode active material)

Table 1 below shows differences in production of the positive electrode active material between the batteries A1 to A12 and Z1 to Z5 and the compositions of the positive electrode active materials.

[Table 1]

| Type of battery | Dropping of sodium hydroxide | | | Firing | | Presence of Zr | Composition of positive electrode active material |
|---|---|---|---|---|---|---|---|
| | Temperature of aqueous solution (°C) | Dropping time (hr) | pH | Temperature (°C) | Time (hr) | | |
| Battery A1 | 50 | 2 | 9 | 920 | 10 | No | $Li_{1.13}Ni_{0.43}Co_{0.17}Mn_{0.26}O_2$ |
| Battery A2 | 50 | 2 | 9 | 970 | 10 | No | $Li_{1.13}Ni_{0.43}Co_{0.17}Mn_{0.26}O_2$ |
| Battery A3 | 50 | 3 | 9 | 970 | 10 | No | $Li_{1.13}Ni_{0.43}Co_{0.17}Mn_{0.26}O_2$ |
| Battery A4 | 50 | 1 | 9 | 900 | 10 | No | $Li_{1.13}Ni_{0.43}Co_{0.17}Mn_{0.26}O_2$ |
| Battery A5 | 50 | 1 | 9 | 880 | 10 | No | $Li_{1.13}Ni_{0.43}Co_{0.17}Mn_{0.26}O_2$ |
| Battery A6 | 50 | 2 | 9 | 830 | 10 | No | $Li_{1.15}Ni_{0.52}Mn_{0.35}O_2$ |
| Battery A7 | 50 | 3 | 9 | 850 | 10 | No | $Li_{1.15}Ni_{0.52}Mn_{0.35}O_2$ |
| Battery A8 | 50 | 2 | 9 | 970 | 10 | No | $Li_{1.09}Ni_{0.32}Co_{0.32}Mn_{0.27}O_2$ |
| Battery A9 | 50 | 2 | 9 | 970 | 10 | No | $Li_{1.05}Ni_{0.33}Co_{0.33}Mn_{0.29}O_2$ |
| Battery A10 | 40 | 1 | 9 | 910 | 10 | No | $Li_{1.13}Ni_{0.43}Co_{0.17}Mn_{0.26}O_2$ |
| Battery A11 | 50 | 3 | 9 | 970 | 10 | Yes | $Li_{1.13}Ni_{0.43}Co_{0.17}Mn_{0.26}O_2$ |
| Battery A12 | 50 | 5 | 9 | 970 | 10 | No | $Li_{1.13}Ni_{0.43}Co_{0.17}Mn_{0.26}O_2$ |
| Battery Z1 | 50 | 1 | 9 | 970 | 10 | No | $Li_{1.13}Ni_{0.43}Co_{0.17}Mn_{0.26}O_2$ |
| Battery Z2 | 50 | 2 | 9 | 1000 | 10 | No | $Li_{1.13}Ni_{0.43}Co_{0.17}Mn_{0.26}O_2$ |
| Battery Z3 | 40 | 1 | 9 | 970 | 10 | No | $Li_{1.13}Ni_{0.43}Co_{0.17}Mn_{0.26}O_2$ |
| Battery Z4 | 40 | 1 | 9 | 850 | 10 | No | $Li_{1.15}Ni_{0.52}Mn_{0.35}O_2$ |
| Battery Z5 | 50 | 2 | 9 | 1000 | 10 | Yes | $Li_{1.13}Ni_{0.43}Co_{0.17}Mn_{0.26}O_2$ |

(Experiment)

Each of the batteries A1 to A12 and Z1 to Z5 was repeatedly charged and discharged 200 times under conditions described below. A charge-discharge efficiency was calculated using formula (2), and then an efficiency ratio was calculated from the charge-discharge efficiency using formula (3). Also, a capacity mention ratio (%) was calculated using formula (4). The results are shown in Table 2.

·Charge-discharge conditions

The conditions were that constant-current charge was performed with 700 mA [1.01t] until a battery voltage was 4.1 V, and charge was performed with a constant voltage until a current was 10 mA, and further discharge was performed with 10 A [(100/7)It] until a battery voltage was 2.5 V. The temperature during charge and discharge was 60°C.

```
Charge-discharge efficiency (%)

= (discharge capacity in first cycle/charge capacity in

first cycle) × 100 ... (2)


 Efficiency ratio (%)

 = (charge-discharge efficiency of each battery/charge-discharge efficiency of battery A1) × 100  ... (3)


Capacity retention ratio (%)

= (discharge capacity in 200th cycle/discharge capacity

in first cycle) × 100 ... (4)
```

[Table 2]

| Type of battery | Aspect ratio | [A] Full width at half maximum by peak search (including device-dependent value) | | [B] Full width at half maximum by peak fitting (including device-dependent value) | | [C] Full width at half maximum by peak fitting (device-dependent value subtracted) | | Volume-average particle diameter (μm) | Efficiency ratio (%) | Capacity retention ratio (%) |
|---|---|---|---|---|---|---|---|---|---|---|
| | | FWHM003 (°) | FWHM110 (°) | FWHM003 (°) | FWHM110 (°) | FWHM003 (°) | FWHM110 (°) | | | |
| Battery A1 | 3.8 | 0.19 | 0.25 | 0.15 | 0.26 | 0.05 | 0.17 | 8 | 100 | 98 |
| Battery A2 | 3.1 | 0.18 | 0.22 | 0.13 | 0.21 | 0.03 | 0.12 | 8 | 100 | 93 |
| Battery A3 | 5.2 | 0.17 | 0.23 | 0.13 | 0.20 | 0.03 | 0.11 | 8 | 100 | 97 |
| Battery A4 | 2.0 | 0.18 | 0.29 | 0.14 | 0.25 | 0.04 | 0.16 | 8 | 100 | 96 |
| Battery A5 | 2.7 | 0.23 | 0.34 | 0.16 | 0.31 | 0.06 | 0.22 | 8 | 100 | 97 |
| Battery A6 | 2.0 | 0.23 | 0.55 | 0.18 | 0.35 | 0.08 | 0.26 | 8 | 98 | 97 |
| Battery A7 | 3.1 | 0.21 | 0.49 | 0.17 | 0.33 | 0.07 | 0.24 | 8 | 98 | 97 |
| Battery A8 | 2.6 | 0.17 | 0.26 | 0.13 | 0.22 | 0.03 | 0.13 | 8 | 100 | 98 |
| Battery A9 | 3.1 | 0.17 | 0.20 | 0.13 | 0.21 | 0.04 | 0.12 | 8 | 100 | 96 |
| Battery A10 | 2.9 | 0.20 | 0.30 | 0.16 | 0.27 | 0.06 | 0.17 | 6 | 100 | 94 |
| Battery A11 | 5.3 | 0.21 | 0.29 | 0.16 | 0.25 | 0.06 | 0.16 | 8 | 100 | 99 |
| Battery A12 | 9.8 | 0.21 | 0.29 | 0.16 | 0.25 | 0.06 | 0.16 | 8 | 100 | 97 |
| Battery Z1 | 1.7 | 0.17 | 0.22 | 0.14 | 0.21 | 0.04 | 0.12 | 8 | 100 | 89 |

EP 2 685 532 A1

| Type of battery | Aspect ratio | [A] Full width at half maximum by peak search (including device-dependent value) | | [B] Full width at half maximum by peak fitting (including device-dependent value) | | [C] Full width at half maximum by peak fitting (device-dependent value subtracted) | | Volume-average particle diameter ($\mu$m) | Efficiency ratio (%) | Capacity retention ratio (%) |
|---|---|---|---|---|---|---|---|---|---|---|
| | | FWHM003 (°) | FWHM110 (°) | FWHM003 (°) | FWHM110 (°) | FWHM003 (°) | FWHM110 (°) | | | |
| Battery Z2 | 2.3 | 0.16 | 0.14 | 0.11 | 0.15 | 0.02 | 0.06 | 8 | 100 | 84 |
| Battery Z3 | 1.7 | 0.18 | 0.24 | 0.14 | 0.22 | 0.04 | 0.13 | 6 | 100 | 85 |
| Battery Z4 | 1.4 | 0.17 | 0.35 | 0.12 | 0.25 | 0.03 | 0.16 | 6 | 100 | 89 |
| Battery Z5 | 2.4 | 0.14 | 0.18 | 0.12 | 0.17 | 0.02 | 0.07 | 8 | 100 | 85 |

Table 2 indicates that the batteries A1 to A12 having an aspect ratio of 2.0 or more and 10.0 or less and a FWHM110 of 0.10° or more and 0.30° or less exhibit higher capacity retention ratios as compared with the batteries Z1, Z3, and Z4 having a FWHM110 of 0.10° or more and 0.30° or less but an aspect ratio of less than 2.0 and the batteries Z2 and Z5 having an aspect ratio of 2.0 or more and 10.0 or less but a FWHM110 of less than 0.10°. These experiment results are considered to be due to reasons below.

The positive electrode active material used in each of the batteries Z1, Z3, and Z4 includes the primary particles with a low aspect ratio and the secondary particles having a high internal particle density, and thus stress induced by expansion and contraction is not relaxed. Therefore, the electron conduction in the secondary particles is decreased. The positive electrode active material used in each of the batteries Z2 and Z5 has a large crystallite size, and thus crystallite interface stress induced by expansion and contraction during charge-discharge is not relaxed. Therefore, the electron conduction in the primary particles is decreased.

In comparison between the batteries Z3 and Z1, in spite of substantially the same aspect ratio and FWHM110, the battery Z3 exhibits a lower capacity retention ratio than the battery Z1. This is because the positive electrode active material of the battery Z3 has a smaller volume-average particle diameter than the positive electrode active material of the battery Z1 and thus has lower packing properties of the positive electrode active material in the positive electrode. Therefore, when the both materials are rolled to have the same packing density, it is necessary to increase the pressure for forming the positive electrode of the battery Z3, and thus the contact area between the positive electrode active material particles in the positive electrode of the battery Z3 is increased. Consequently, when the particles of the positive electrode active material are expanded, the crystallite interface stress is not relaxed, thereby causing defects or the like in the particles of the positive electrode active material and thus decreasing electron conduction in the secondary particles.

A comparison between the battery Z2 and the battery Z5 which are different only in the presence of Zr reveals that the battery Z5 using the positive electrode active material containing Zr has a slightly higher capacity retention ratio than the battery Z2 using the positive electrode active material not containing Zr. This is because FWHM110 is slightly increased by adding Zr to the positive electrode active material, and thus crystal growth is suppressed, thereby causing a small crystallite size and nonuniform crystal orientation. Therefore, crystallite interface stress induced by expansion and contraction during charge-discharge is relaxed, and a decrease in the electron conduction in the primary particles is suppressed. However, since crystal growth cannot be satisfactorily suppressed only by adding Zr to the positive electrode active material, a significant improvement in the capacity retention ratio is not observed.

On the other hand, in the positive electrode active material used in each of the batteries A1 to A12, crystal growth is sufficiently suppressed, thereby causing a small crystallite size and nonuniform crystal orientation. Therefore, crystallite interface stress induced by expansion and contraction during charge-discharge is sufficiently relaxed, and a decrease in the electron conduction in the primary particles is significantly suppressed. In addition, the positive electrode active material used in each of the batteries A1 to A12 includes the primary particles with a high aspect ratio and the secondary particles having a lower internal particle density, thereby relaxing the stress induced by expansion and contraction. Therefore, a decrease in the electron conduction in the secondary particles is also sufficiently suppressed.

A comparison between the battery A3 and the battery A11 which are different only in the presence of Zr reveals that the battery A11 using the positive electrode active material containing Zr has a higher capacity retention ratio than the battery A3 using the positive electrode active material not containing Zr. This is because FWHM110 is slightly increased by adding Zr to the positive electrode active material, and thus crystal growth is suppressed, thereby causing a small crystallite size and nonuniform crystal orientation. Therefore, crystallite interface stress induced by expansion and contraction during charge-discharge is relaxed, and a decrease in the electron conduction in the primary particles is suppressed.

Further, the batteries A1 to A5 and A8 to A12 each having a FWHM110 of 0.10° or more and 0.22° or less exhibit higher efficiency ratios than the batteries A6 and A7 each having a FWHM110 exceeding 0.22°. This is because with a FWHM110 exceeding 0.22°, crystal growth becomes slightly insufficient (smaller crystallite size), and thus the capacity of the positive electrode is slightly decreased due to difficulty in lithium insertion and desertion. Therefore, FWHM110 is required to be regulated to 0.10° or more and 0.30° or less, particularly 0.10° or more and 0.22° or less.

Industrial Applicability

A nonaqueous electrolyte secondary battery according to the present invention can be used for various power supplies such as a power supply for a hybrid car, and the like.

Reference Signs List

1    positive electrode

2    negative electrode
3    separator
4    sealing plate
5    negative electrode case
6    positive electrode current collector
7    negative electrode current collector
8    insulating packing

**Claims**

1. A nonaqueous electrolyte secondary battery comprising a positive electrode containing a positive electrode active material, a negative electrode containing a negative electrode active material, and a nonaqueous electrolyte containing a solute dissolved in a nonaqueous solvent, wherein the positive electrode active material includes secondary particles composed of aggregated primary particles, the primary particles have an aspect ratio of 2.0 or more and 10.0 or less, and in powder X-ray diffraction measurement using CuKα ray, the positive electrode active material satisfies $0.100 \leq FWHM110 \leq 0.30°$ wherein FWHM110 represents a full width at half maximum of a 110 diffraction peak present within a range of diffraction angle $2\theta$ of $64.5° \pm 1.0°$.

2. The nonaqueous electrolyte secondary battery according to Claim 1, wherein the full width at half maximum FWHM110 of a 110 diffraction peak of the positive electrode active material is $0.10° \leq FWHM110 \leq 0.22°$.

3. The nonaqueous electrolyte secondary battery according to Claim 1 or 2, wherein the positive electrode active material contains a lithium transition metal oxide having a layered structure and contains nickel and/or manganese as transition metals in the lithium transition metal oxide.

4. The nonaqueous electrolyte secondary battery according to Claim 3, wherein the lithium transition metal oxide is composed of the two elements of nickel and manganese as main components of the transition metals.

5. The nonaqueous electrolyte secondary battery according to Claim 4, wherein the lithium transition metal oxide is represented by the general formula $Li_{1+x}Ni_aMn_bCo_cO_{2+d}$ (wherein x, a, b, c, and d satisfy the conditions of $x + a + b + c = 1$, $0 < x \leq 0.2$, $0 \leq c/(a + b) < 0.6$, $0.7 \leq a/b \leq 3.0$, and $-0.1 \leq d \leq 0.1$).

6. The nonaqueous electrolyte secondary battery according to any one of Claims 1 to 5, wherein the secondary particles of the positive electrode active material have a volume-average particle diameter of 4 μm or more and 15 μm or less.

7. The nonaqueous electrolyte secondary battery according to any one of Claims 1 to 6, wherein a mixed solvent containing cyclic carbonate and linear carbonate at a volume ratio regulated to a range of 2:8 to 5:5 is used as the nonaqueous solvent of the nonaqueous electrolyte.

8. The nonaqueous electrolyte secondary battery according to any one of Claims 1 to 7, wherein the negative electrode active material contains amorphous carbon.

9. The nonaqueous electrolyte secondary battery according to Claim 8, wherein the negative electrode active material contains graphite coated with amorphous carbon.

# Figure 1

# Figure 2

# Figure 3

# Figure 4

# Figure 5

$$y = 5.074 \times 10^{-6}x^2 - 5.368 \times 10^{-4}x + 1.04 \times 10^{-1}$$

# Figure 6

| INTERNATIONAL SEARCH REPORT | International application No. |
|---|---|
| | PCT/JP2011/080498 |

A. CLASSIFICATION OF SUBJECT MATTER
*H01M4/505*(2010.01)i, *H01M4/36*(2006.01)i, *H01M4/525*(2010.01)i, *H01M4/587*
(2010.01)i, *H01M10/0525*(2010.01)i, *H01M10/0569*(2010.01)i

According to International Patent Classification (IPC) or to both national classification and IPC

B. FIELDS SEARCHED

Minimum documentation searched (classification system followed by classification symbols)
H01M4/505, H01M4/36, H01M4/525, H01M4/587, H01M10/0525, H01M10/0569

Documentation searched other than minimum documentation to the extent that such documents are included in the fields searched
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-103308 A  (Mitsubishi Chemical Corp.), 01 May 2008 (01.05.2008), claim 1; examples 1 to 4 & JP 2010-278015 A     & US 2009/0104530 A1 & EP 2006937 A2        & WO 2007/116971 A1 & KR 10-2008-0108222 A   & CN 102044672 A & CN 102044673 A | 1-9 |
| A | JP 2004-119221 A  (Seimi Chemical Co., Ltd.), 15 April 2004 (15.04.2004), claim 7; paragraph [0028] & US 2006/0263690 A1     & US 2009/0017383 A1 & US 2010/0294985 A1     & WO 2004/030125 A1 & KR 10-2005-0030899 A   & KR 10-2006-0127272 A & CN 1685542 A          & AU 2003266620 A | 1-9 |

☒ Further documents are listed in the continuation of Box C.     ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 March, 2012 (15.03.12) | 27 March, 2012 (27.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 685 532 A1**

<table>
<tr><td colspan="2" align="center">**INTERNATIONAL SEARCH REPORT**</td><td>International application No.<br>PCT/JP2011/080498</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2009/099158 A1  (AGC Seimi Chemical Co., Ltd.), 13 August 2009 (13.08.2009), claims 1, 8, 13; examples (Family: none) | 1-9 |
| A | JP 2009-081130 A  (Mitsubishi Chemical Corp.), 16 April 2009 (16.04.2009), claim 1 (Family: none) | 1-9 |
| A | JP 2005-251716 A  (Nichia Chemical Industries, Ltd.), 15 September 2005 (15.09.2005), claim 1; paragraph [0029] (Family: none) | 1-9 |

Form PCT/ISA/210 (continuation of second sheet) (July 2009)

22

**EP 2 685 532 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005251716 A
- JP 2009081130 A
- WO 2002086993 A